# EUROPEAN PATENT SPECIFICATION

(11) **EP 3 878 669 B1**
(45) Date of publication and mention of the grant of the patent: **16.08.2023**
(21) Application number: 19942985.3
(22) Date of filing: 30.08.2019
(51) Int. Cl.: B60C 23/04

(54) **TRANSMITTER AND ID REGISTRATION DEVICE**
SENDER UND ID-REGISTRIERVORRICHTUNG
ÉMETTEUR ET DISPOSITIF D'ENREGISTREMENT D'ID

(43) Date of publication of application: 15.09.2021
(73) Proprietor: Pacific Industrial Co., Ltd., Ogaki-shi, Gifu 503-8603 (JP)
(72) Inventor: TSUJITA, Yasuhisa, Ogaki-shi, Gifu 503-8603 (JP)
(74) Representative: Appleyard Lees IP LLP
(86) International application number: PCT/JP2019/034074
(87) International publication number: WO 2021/038819

(56) References cited:
- WO-A1-2019/106827
- DE-B3-102013 001 837
- JP-A- 2000 211 447
- JP-A- 2002 354 561
- JP-A- 2004 314 726
- US-A1- 2013 061 456
- US-A1- 2016 355 063

## Description

### TECHNICAL FIELD

The present invention relates to a transmitter and an ID registration device.

### BACKGROUND ART

Patent Document 1 discloses one example of a tire condition monitoring apparatus installed in a vehicle with wheel assemblies. The tire condition monitoring apparatus of Patent Document 1 includes transmitters, which are configured to be respectively attached to the wheel assemblies of the vehicle, and a receiver.

Each transmitter includes a pressure sensor, which is configured to detect the air pressure of the tire, a transmitting unit, a controlling unit, which is configured to control the transmitter, and a storage unit, which is configured to store an ID code. The transmitting unit transmits a data signal. The data signal contains, for example, a detection result detected by the pressure sensor. The data signal also contains the ID code of the transmitter. The ID codes of the transmitters are registered in the receiver. When any of the registered ID codes agrees with the ID code contained in the data signal transmitted by a transmitter, the receiver determines that the data signal is directed to the receiver.

Registration of an ID code in a transmitter is executed by writing the ID code into the storage unit of the transmitter. The ID code is written through transmission of a trigger signal, which requests writing of the ID code, to the transmitter using a trigger device. When the ID code is written using the trigger device, the user of the trigger device enters the ID code, of which registration in the transmitter is requested, into the trigger device. When the ID code is entered, the trigger device transmits a trigger signal containing the ID code. The transmitter includes a trigger receiving unit, which is configured to receive the trigger signal. When the trigger receiving unit receives the trigger signal, the transmitter writes the ID code contained in the trigger signal into the storage unit. Accordingly, the ID code is registered in the transmitter.
DE102013001837B3 relates to a universal monitoring device for vehicle tires;
US2013/061456A1 relates to a method of replacing a detection housing placed inside the wheels of a vehicle, and a device and sensor allowing the implementation thereof.

### PRIOR ART DOCUMENT

### Patent Document

Patent Document 1: Japanese Laid-Open Patent Publication No. 2014-91344

### SUMMARY OF THE INVENTION

### Problems that the Invention is to Solve

Some types of transmitters are configured to select one of multiple types of specifications, in accordance with which the transmitters operate. With this type of transmitter, it is necessary to determine which one of multiple types of specifications will be used to operate the transmitter. Selection of the specification can be performed, for example, by using the above-described trigger device. The user of the trigger device selects one of multiple of types of specifications. When a specification is selected, the trigger device transmits a trigger signal containing information representing the specification. When the trigger receiving unit receives the trigger signal, the controlling unit causes the transmitter to operate in accordance with the specification contained in the trigger signal. As described above, the user of the trigger device needs to separately perform the operation for writing the ID code into the storage unit and the operation for selecting the specification. This reduces the operating efficiency.

It is an objective of the present invention to provide a transmitter and an ID registration device that improve operating efficiency.

### Means for Solving the Problems

In order to achieve the foregoing objective and in accordance with a first aspect of the present invention, a transmitter configured to be attached to a tire valve and transmit a data signal to a receiver is provided. The transmitter includes a trigger receiving unit, a specification storage unit, an ID storing unit, a linking information storing unit, and a controlling unit. The trigger receiving unit is configured to receive a trigger signal transmitted from an ID registration device. The trigger signal contains a command to the transmitter. The specification storage unit is configured to store multiple types of specifications. The ID storing unit is configured such that an ID code contained in the trigger signal received by the trigger receiving unit is written into the ID storing unit. The linking information storing unit is configured to store linking information that links each of the specifications and ID codes to each other. The controlling unit is configured to cause, based on the linking information, the transmitter to operate in accordance with the specification which is linked to the ID code stored in the ID storing unit

The above-described configuration writes the ID code into the ID storing unit when the trigger receiving unit receives the trigger signal, which contains the ID code. The controlling unit causes the transmitter to operate in accordance with the specification that is linked to the ID code by the linking information. Since the linking information, which links the ID code and the specification to each other, is stored in advance, the specification of the transmitter is set by registering the ID code in the transmitter. It is thus unnecessary to perform registration of the ID code and setting of the specification, separately. This improves the operating efficiency of the user of the ID registration device.

The above-described transmitter incudes a pressure sensor configured to detect an air pressure of a tire. The specifications may include a pressure specification related to the air pressure of the tire detected by the pressure sensor.

In the above-described transmitter, the specifications may include a protocol corresponding to the receiver.

In the above-described transmitter, the linking information may link the specifications to groups of the ID codes that are grouped according to the value of the ID codes.

In the above-described transmitter, the linking information may link the specifications to a number of digits of the ID code.

In order to achieve the foregoing objectives and in accordance with a second aspect of the present invention, an ID registration device with the features of claim 6 is provided.

With this configuration, the selecting unit selects the specification that is linked to the ID code by the linking information when the ID code is entered using the entry unit. The trigger signal contains the ID code entered using the entry unit, and information representing the specification selected using the selecting unit. The trigger signal causes the ID code to be registered in the transmitter, and the specification of the transmitter to be set. It is thus unnecessary to perform registration of the ID code and setting of the specification, separately. This improves the operating efficiency of the user of the ID registration device.

### Effects of the Invention

The present invention improves operating efficiency.

### BRIEF DESCRIPTION OF THE DRAWINGS

Fig. 1 is a schematic diagram of a tire condition monitoring apparatus and a trigger device.
Fig. 2 is a schematic diagram of a transmitter and the trigger device.
Fig. 3 is a perspective view illustrating a tire valve to which the transmitter is attached, and a wheel to which the tire valve is attached.
Fig. 4 is an interaction diagram of a user of a trigger device, the trigger device, and the transmitter according to a first embodiment.
Fig. 5 is a diagram showing linking information that links specifications to groups of ID codes that are grouped according to their values.
Fig. 6 is an interaction diagram of a user of a trigger device, the trigger device, and a transmitter according to a second embodiment.
Fig. 7 is a diagram showing linking information that links the number of digits of ID codes to specifications.

### MODES FOR CARRYING OUT THE INVENTION

### First Embodiment

A transmitter and an ID registration device according to a first embodiment will now be described.

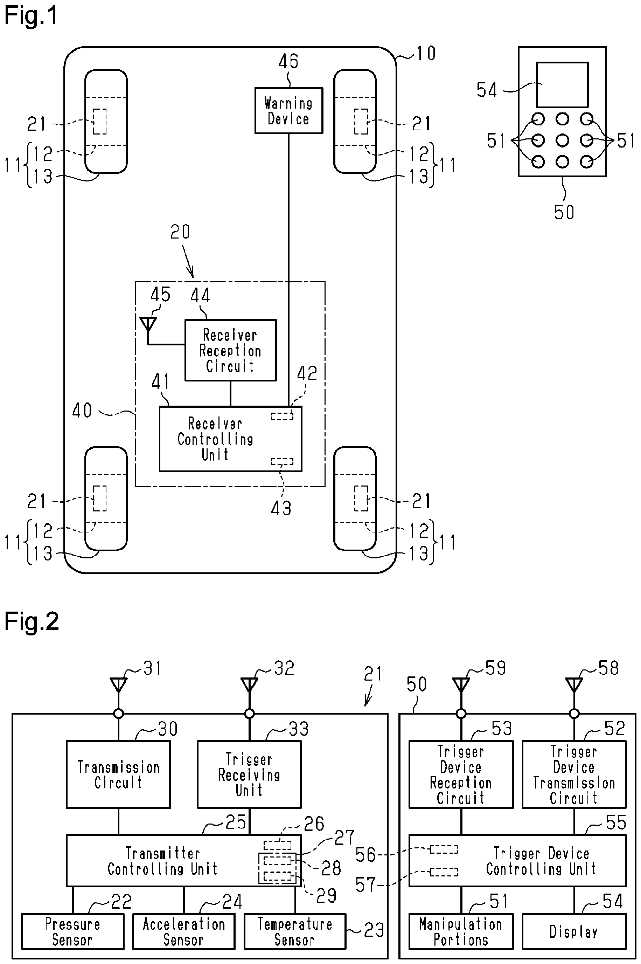

As shown in Figs. 1 and 2, a tire condition monitoring apparatus 20 includes transmitters 21 and a receiver 40. Each transmitter 21 is configured to be attached to one of four wheel assemblies 11 of a vehicle 10. The receiver 40 is configured to be installed in the vehicle 10.

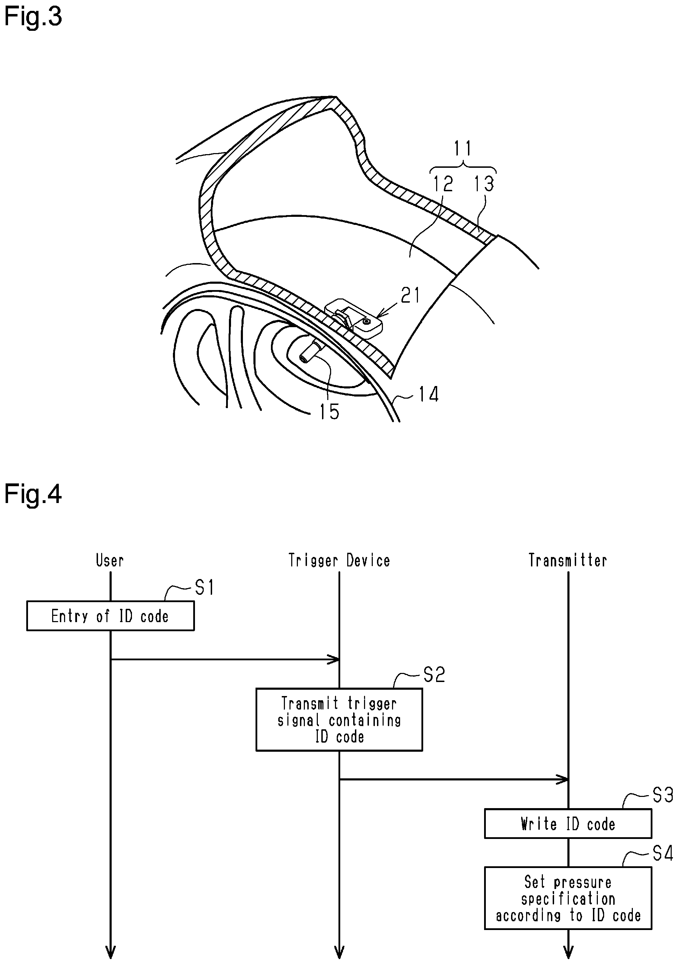

As shown in Fig. 3, each wheel assembly 11 includes a wheel 12 and a tire 13 mounted on the wheel 12. Each transmitter 21 is attached to a tire valve 15 installed in a rim 14 of the wheel 12 so as to be integrated with the tire valve 15. The tire valve 15 may be a snap-in valve or a clamp-in valve. The transmitter 21 is attached to the wheel 12, on which the tire 13 is mounted, such that the transmitter 21 is arranged inside the tire 13. The transmitter 21 detects the condition of the corresponding tire 13, for example, the air pressure and the internal temperature of the tire 13, and wirelessly transmits a data signal including the detection results to the receiver 40. The tire condition monitoring apparatus 20 is configured to monitor the condition of the tire 13 by receiving the data signal transmitted from the transmitter 21 at the receiver 40.

As shown in Fig. 2, the transmitter 21 includes a pressure sensor 22, a temperature sensor 23, an acceleration sensor 24, a transmitter controlling unit 25, a transmission circuit 30, a transmission antenna 31, a reception antenna 32, and a trigger receiving unit 33.

The pressure sensor 22 is configured to detect an air pressure of the corresponding tire 13. The pressure sensor 22 outputs a detection result to the transmitter controlling unit 25. The temperature sensor 23 is configured to detect the temperature inside the corresponding tire 13. The temperature sensor 23 outputs a detection result to the transmitter controlling unit 25.

The acceleration sensor 24 is configured to rotate integrally with the wheel assembly 11 to detect the centrifugal acceleration acting on the transmitter 21. The centrifugal acceleration acting on the transmitter 21 can be regarded as the centrifugal acceleration acting on the wheel assembly 11. The acceleration sensor 24 outputs the detection result to the transmitter controlling unit 25.

The transmitter controlling unit 25, which serves as a controlling unit, is composed of circuitry such as a microcomputer including a CPU 26 and a storage unit 27. The storage unit 27 includes a volatile memory 28, which includes a random access memory (RAM), and a nonvolatile memory 29, which includes a read only memory (ROM) and an electrically erasable programmable read-only memory (EEPROM). An ID code, which is identification information unique to each transmitter 21, is registered in the storage unit 27. The storage unit 27 stores various programs for controlling the transmitter 21.

The transmitter controlling unit 25 may include dedicated hardware that executes at least part of various processes, that is, an application specific integrated circuit (ASIC). The transmitter controlling unit 25 may be circuitry including one or more processors that operate according to a computer program, one or more dedicated hardware circuits such as an ASIC, or a combination thereof. The processor includes a CPU and a memory such as a RAM and a ROM. The memory stores program code or instructions configured to cause the CPU to execute processes. The memory, which is a computer readable medium, includes any type of media that are accessible by general-purpose computers and dedicated computers.

The transmitter controlling unit 25 generates data and outputs it to the transmission circuit 30. The data includes information such as a preamble, an ID code, pressure data, temperature data, and an error detection code, which is a code for detecting errors. The pressure data indicates a detection value of the pressure sensor 22. The temperature data indicates a detection value of the temperature sensor 23. The data is generated in accordance with a protocol that enables communication with the receiver 40. The pressure data is generated in accordance with a predetermined pressure specification. The pressure specification defines resolution, a pressure range, and a pressure sudden change threshold of the pressure data. The pressure sudden change threshold is a threshold for detecting a sudden change in the pressure of the tire 13. For example, the transmitter controlling unit 25 obtains the detection value of the pressure sensor 22 at a predetermined period. When the difference between the obtained detection value and the previous detection value is greater than or equal to the pressure sudden change threshold, the transmitter controlling unit 25 determines that the pressure of the tire 13 has changed suddenly.

The tires 13 include standard-pressure tires, which are mainly used in passenger cars, and high-pressure tires, which are mainly used in commercial vehicles such as light trucks. The standard-pressure tires are used at lower pressures than the high-pressure tires. For example, the standard-pressure tires are used at pressures in a range from 250 to 300 [kPa]. In contrast, the high-pressure tires are used at pressures in a range from 500 to 650 [kPa]. The high-pressure tires are designed to be used at higher pressures than the standard-pressure tires, and therefore have higher pressure resistance than the standard-pressure tires. In the present embodiment, the storage unit 27 stores two pressure specifications: a standard-pressure specification corresponding to the standard-pressure tires and a high-pressure specification corresponding to the high-pressure tires. The pressure specifications are stored, for example, in the ROM of the nonvolatile memory 29. Specifically, the storage unit 27 stores a program that operates the transmitter 21 in accordance with the standard-pressure specification, and a program that operates the transmitter 21 in accordance with the high-pressure specification. The storage unit 27 functions as a specification storage unit, which is configured to store multiple types of specifications. The resolution of the standard-pressure specification is higher than the resolution of the high-pressure specification. The pressure range of the standard-pressure specification is lower than the pressure range of the high-pressure specification. The maximum pressure that can be used in the standard-pressure tires is lower than that of the high-pressure tires. This allows the pressure range to be lowered and the resolution to be increased. In contrast, since the maximum pressure that can be used in the high-pressure tires is higher than that of the standard-pressure tires, the pressure range needs to be raised. The pressure sudden change threshold of the standard-pressure specification is lower than the pressure sudden change threshold of the high-pressure specification. If the number of bits of the pressure data is the same, the pressure range is determined by the resolution. Thus, it can be said that the pressure range is determined by the resolution.

The storage unit 27 stores selection information, which indicates which of the standard-pressure specification and the high-pressure specification has been selected. The selection information is stored, for example, in a rewritable memory such as the volatile memory 28 or the EEPROM of the nonvolatile memory 29. The standard-pressure specification is selected if the tire 13 of the wheel assembly 11 to which the transmitter 21 is attached is a standard-pressure tire. The high-pressure specification is selected if the tire 13 of the wheel assembly 11 to which the transmitter 21 is attached is a high-pressure tire. The selection information of the present embodiment is data that associates each of the standard-pressure specification and the high-pressure specification with binary data (code). Different codes are given to the standard-pressure specification and the high-pressure specification, and the code corresponding to the selected pressure specification is stored in the storage unit 27. The selection information is, for example, 1-bit information. The value of 0 of the selection information indicates that the standard-pressure specification is selected, and the value of 1 of the selection information indicates that the high-pressure specification is selected.

When generating pressure data, the transmitter controlling unit 25 generates the pressure data in accordance with the pressure specification selected based on the selection information. Accordingly, the pressure data is generated in accordance with the pressure specification corresponding to the type of the tire 13. The transmitter controlling unit 25 sets the pressure sudden change threshold in accordance with the pressure specification selected based on the selection information. This sets the pressure sudden change threshold in accordance with the type of the tire 13.

The transmission circuit 30 modulates data from the transmitter controlling unit 25 to generate a data signal, and transmits the data signal through the transmission antenna 31. Any suitable modulation technique can be performed by the transmission circuit 30. The data signal is transmitted at a predetermined interval. When detecting that there is a sudden change in the pressure of the tire 13, the transmitter controlling unit 25 performs a warning transmission. The warning transmission is performed, for example, by reducing the transmission interval, as compared to a case in which no sudden change in the pressure is occurring, or by transmitting a data signal including information indicating the occurrence of a sudden change in the pressure.

The trigger receiving unit 33 is configured to receive a trigger signal transmitted by a trigger device 50 (discussed below) through the reception antenna 32. The trigger receiving unit 33 demodulates the received trigger signal and outputs it to the transmitter controlling unit 25.

As shown in Fig. 1, the receiver 40 includes a receiver controlling unit 41, a receiver reception circuit 44, and a reception antenna 45. The receiver reception circuit 44 demodulates a data signal that is transmitted from each transmitter 21 and received via the reception antenna 45, and outputs the demodulated signal to the receiver controlling unit 41. The receiver controlling unit 41 is connected to a warning device 46.

The receiver controlling unit 41 includes circuitry such as a microcomputer including a receiver CPU 42 and a receiver storage unit 43 such as a ROM and a RAM. The receiver controlling unit 41 may include dedicated hardware that executes at least part of various processes, that is, an application specific integrated circuit (ASIC). The receiver controlling unit 41 may be circuitry including one or more processors that operate according to a computer program, one or more dedicated hardware circuits such as an ASIC, or a combination thereof. The processor includes a CPU and a memory such as a RAM and a ROM. The memory stores program codes or instructions configured to cause the CPU to execute processes. The memory, which is a computer readable medium, includes any type of media that are accessible by general-purpose computers and dedicated computers.

The receiver storage unit 43 stores the ID codes of the respective transmitters 21. The receiver controlling unit 41 verifies whether the ID code included in the data signal agrees with any of the ID codes stored in the receiver storage unit 43. When the ID code included in the data signal agrees with any of the ID codes stored in the receiver storage unit 43, the receiver controlling unit 41 determines that the received data signal has been directed to the receiver 40. In other words, the receiver controlling unit 41 uses, as data representing the condition of the tire 13, the pressure data and the temperature data included in the data signal which includes the ID code stored in the receiver storage unit 43.

The receiver controlling unit 41 obtains the condition of the tire 13 based on the data included in the received data signal. When there is an anomaly in the tire 13, the receiver controlling unit 41 performs a notification by using the warning device 46. For example, the warning device 46 may be a device that notifies the user of the anomaly by sound, or illumination or blinking of light. Also, the receiver controlling unit 41 may display the condition of the tire 13 on the display device, which can be visually recognized by the occupants of the vehicle 10.

Next, the trigger device 50 will be described. The trigger device 50 is a device that transmits, to the transmitter 21, a trigger signal that contains a command, so as to cause the transmitter 21 to perform various actions. The trigger signal may be, for example, a signal requesting the transmitter 21 to transmit a signal containing various types of information, a signal requesting the storage unit 27 of the transmitter 21 to write the ID code, a signal setting the specification of the transmitter 21, or a signal that updates the software of the transmitter 21. The trigger device 50 is located, for example, at a maintenance facility such as a dealer or a production base such as a factory that manufactures the transmitter 21 and a factory that attaches the transmitter 21 to the wheel assembly 11.

As shown in Figs. 1 and 2, the trigger device 50 includes manipulation portions 51, a trigger device transmission circuit 52, a trigger device reception circuit 53, a display 54, a trigger device controlling unit 55, a trigger device transmission antenna 58, and a trigger device reception antenna 59.

The manipulation portions 51 are manipulated by the user of the trigger device 50. The manipulation portions 51 function as an input interface used to input information to the trigger device 50. The user of the trigger device 50 can specify operations that he/she requests the transmitter 21 to do by operating the manipulation portions 51. The trigger device 50 transmits a trigger signal requesting an operation corresponding to the manipulation of the manipulation portions 51. The manipulation portions 51 are connected to the trigger device controlling unit 55. The trigger device controlling unit 55 generates data in correspondence with manipulation of the manipulation portions 51. This data includes a command to the transmitter 21.

The trigger device controlling unit 55 includes circuitry such as a microcomputer including a CPU 56 and a trigger device storage unit 57. The trigger device storage unit 57 includes memory such as RAM and ROM. The trigger device controlling unit 55 may include dedicated hardware that executes at least part of various processes, that is, an application specific integrated circuit (ASIC). The trigger device controlling unit 55 may be circuitry including one or more processors that operate according to a computer program, one or more dedicated hardware circuits such as an ASIC, or a combination thereof. The processor includes a CPU and a memory such as RAM and ROM. The memory stores program codes or instructions configured to cause the CPU to execute processes. The memory, which is a computer readable medium, includes any type of media that are accessible by general-purpose computers and dedicated computers.

The trigger device controlling unit 55 outputs the generated data to the trigger device transmission circuit 52. The trigger device transmission circuit 52, which functions as a trigger transmitting unit, modulates the data from the trigger device controlling unit 55 to generate a trigger signal, and transmits it through the trigger device transmission antenna 58. Any suitable modulation technique can be performed by the trigger device transmission circuit 52.

The trigger device reception circuit 53 receives a signal transmitted from the transmitter 21 via the trigger device reception antenna 59. The trigger device reception circuit 53 demodulates the signal and outputs it to the trigger device controlling unit 55.

The trigger device 50 and the transmitter 21 perform the processes described below when writing an ID code into the storage unit 27 of the transmitter 21 and selecting a pressure specification of the transmitter 21. The transmitter 21 of the present embodiment is capable of storing any ID code in the storage unit 27 using the trigger device 50, and of selecting one of the standard-pressure specification or the high-pressure specification. The transmitter 21 attached to the tire valve 15 is replaced by a new transmitter 21 due to breakdown or the end of life. At this time, an ID code may be stored in the storage unit 27 of the new transmitter 21, and the pressure specification may be selected for the new transmitter 21. Also, a transmitter 21 is attached to a tire valve 15 that has not been equipped with a transmitter 21 in some cases. At this time also, an ID code may be stored in the storage unit 27 of the transmitter 21, and the pressure specification may be selected for the transmitter 21.

As shown in Fig. 4, the user of the trigger device 50 enters an ID code, of which writing into the storage unit 27 of the transmitter 21 is requested. The ID code can be entered into the trigger device 50 by various methods. The ID code may be entered into the trigger device 50 by the user manipulating the manipulation portions 51. Alternatively, the ID code may be entered by the trigger device 50 transmitting a trigger signal that requests return of the ID code of the transmitter 21. When the transmitter 21 attached to the tire valve 15 is replaced with a new transmitter 21, the ID code of the transmitter 21 attached to the tire valve 15 is continuously used for the new transmitter 21 in some cases. In this case, the trigger device 50 may be connected to the receiver 40 to read the ID code stored in the receiver storage unit 43, so that the ID code is entered into the trigger device 50. Alternatively, the ID code may be entered into the trigger device 50 by scanning optically readable information such as a barcode or a QR code (registered trademark) on the transmitter 21 attached to the tire valve 15. The manipulation portions 51 function as an entry unit when the ID code is entered into the trigger device 50 by manipulating the manipulation portions 51, for example, when the ID code is directly entered using the manipulation portions 51 or when the ID code is returned through transmission of a trigger signal by manipulation of the manipulation portions 51. When the ID code stored in the receiver storage unit 43 is read out, a connection portion of the trigger device 50 connected to the receiver 40 functions as an entry unit.

The ID code entered into the trigger device 50 by the user varies depending on the type of the tire 13 of the wheel assembly 11 to which the transmitter 21 is attached. In the present embodiment, the ID code entered into the trigger device 50 varies depending on whether the tire 13 is a standard-pressure type or a high-pressure type. A different ID code is entered depending on which of the standard-pressure specification and the high-pressure specification is selected as the pressure specification of the transmitter 21.

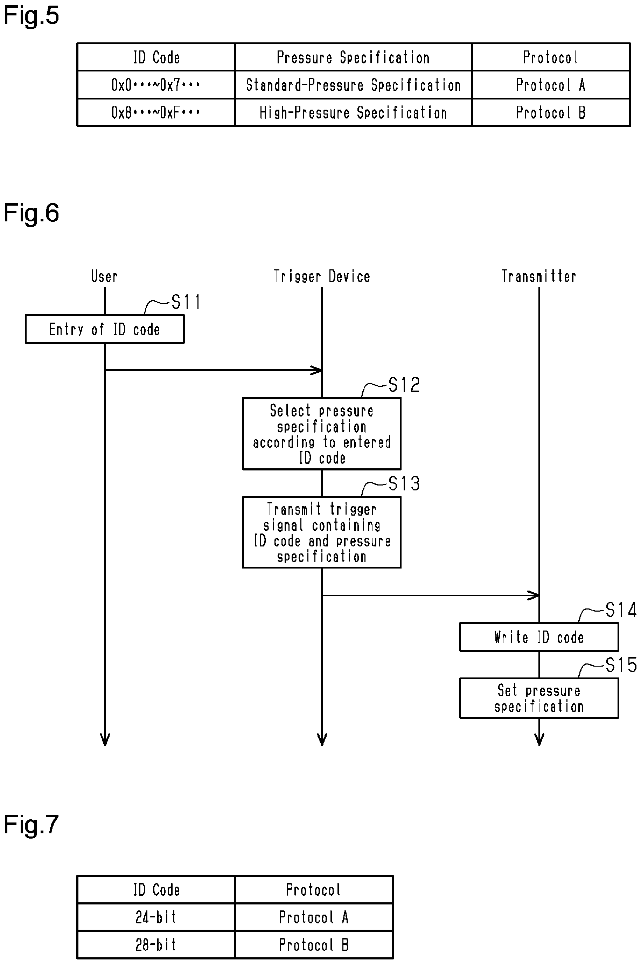

As shown in Fig. 5, if the tire 13 of the wheel assembly 11 to which the transmitter 21 is attached is a standard-pressure type, the user enters, into the trigger device 50, an ID code of which the most significant digit is 0 to 7 when the ID code is expressed in hexadecimal. If the tire 13 of the wheel assembly 11 to which the transmitter 21 is attached is a high-pressure type, the user enters, into the trigger device 50, an ID code of which the most significant digit is 8 to F when the ID code is expressed in hexadecimal.

As shown in Fig. 4, in step S2, the trigger device controlling unit 55 transmits, to the transmitter 21, a trigger signal that contains the ID code entered in step S1 and a command that requests the ID code to be written into the storage unit 27.

When receiving the trigger signal in step S3, the transmitter controlling unit 25 writes the ID code contained in the trigger signal into the storage unit 27. The ID code is written into, for example, a rewritable memory such as the volatile memory 28 or the EEPROM of the nonvolatile memory 29. The storage unit 27 functions as an ID storing unit, which is configured to store the ID code. The transmitter 21 of the present embodiment is capable of rewriting the ID code in response to a request from the trigger device 50. The trigger device 50 functions as an ID registration device, which registers ID code in the transmitter 21 by writing the ID code into the storage unit 27 of the transmitter 21.

Subsequently, in steps S4, the transmitter controlling unit 25 sets a pressure specification according to the ID code. The storage unit 27 of the transmitter controlling unit 25 stores linking information, which links the two pressure specifications to ID codes. The linking information is stored, for example, in the nonvolatile memory 29. The storage unit 27 functions as a linking information storing unit. As shown in Fig. 5, the standard-pressure specification is linked to ID codes of which the most significant digits are 0 to 7 when the ID codes are expressed in hexadecimal. The high-pressure specification is linked to ID codes of which the most significant digits are 8 to F when the ID codes are expressed in hexadecimal. The linking information links the pressure specifications to groups of the ID codes, which are grouped according to their values. In the present embodiment, the ID codes are grouped into two groups according to the most significant digits when the ID codes are expressed in hexadecimal. The transmitter controlling unit 25 sets the pressure specification such that the transmitter 21 operates in accordance with the pressure specification linked to the ID code contained in the trigger signal. Specifically, the transmitter controlling unit 25 sets the selection information to 0 if the pressure specification corresponding to the ID code contained in the trigger signal is the standard-pressure specification, and sets the selection information to 1 if the pressure specification corresponding to the ID code contained in the trigger signal is the high-pressure specification. Accordingly, the transmitter 21 operates in accordance with the pressure specification that is linked to the ID code by the linking information.

An operation of the first embodiment will now be described.

When the trigger receiving unit 33 receives a trigger signal containing an ID code, the transmitter controlling unit 25 writes the ID code into the storage unit 27. The transmitter controlling unit 25 selects the pressure specification that is linked to the ID code by the linking information. The transmitter 21 then operates in accordance with the pressure specification that is linked to the ID code by the linking information.

The first embodiment has the following advantages.
(1-1) The transmitter controlling unit 25 writes an ID code into the storage unit 27 in response to a request from the trigger device 50. Further, the transmitter controlling unit 25 sets the pressure specification such that the transmitter 21 operates in accordance with the pressure specification linked to the ID code. Since the linking information, which links ID codes and pressure specifications to each other, is stored in advance, the pressure specification is set by writing the ID code into the storage unit 27. This reduces the number of operations performed by the user of the trigger device 50, as compared to a case in which writing of the ID code into the storage unit 27 and setting of the pressure specification are performed separately. This improves the operating efficiency of the user of the trigger device 50.
(1-2) The ID codes are linked to the pressure specifications, which are specifications. The pressure specification needs to be selected depending on whether the tire 13 is a standard-pressure type or a high-pressure type. Since different pressure specifications can be set in accordance with the type of the tire 13, the same type of transmitter 21 can be used for a standard-pressure tire and a high-pressure tire.
(1-3) The linking information associates the pressure specifications with the groups of the ID codes, which are grouped according to their values. When the number of digits of the ID codes are linked to the pressure specifications by utilizing the difference in the number of digits of the ID codes between different protocols, the ID code of the same protocol cannot be associated with different pressure specifications. However, in the first embodiment, the pressure specifications are linked to the groups of the ID codes, which are grouped according to their values, so that the ID codes of the same protocol can be linked to different pressure specifications.
(1-4) The pressure specification is set by the transmitter controlling unit 25 in accordance with the ID code contained in the trigger signal. The pressure specification of the transmitter 21 therefore does not need to be set using the trigger device 50. This allows the software of the trigger device 50 to be simplified.

### Second Embodiment

A transmitter and an ID registration device according to a second embodiment will now be described.

The trigger device 50, which is an ID registration device of the second embodiment, and the transmitter 21 are different from those of the first embodiment in writing of an ID code into the storage unit 27, and in the process executed during selection of the pressure specification. The hardware configuration of the trigger device 50 and the transmitter 21 is similar to the first embodiment.

As shown in Fig. 6, the user of the trigger device 50 enters an ID code into the trigger device 50 in steps S11. The process of steps S11 is the same as the process of step S1 in the first embodiment. That is, the trigger device 50 receives an ID code that corresponds to the type of the tire 13 of the wheel assembly 11 to which the transmitter 21 is attached.

In step S12, the trigger device controlling unit 55 selects the pressure specification requested to be set in the transmitter 21 based on the entered ID code. The trigger device storage unit 57 stores linking information, which links ID codes and pressure specifications to each other. The linking information is the same as the linking information stored in the storage unit 27 of the transmitter 21 in the first embodiment, and is shown in Fig. 4. The trigger device controlling unit 55 selects the pressure specification to be set in the transmitter 21, based on the linking information. The trigger device controlling unit 55 functions as a selecting unit by executing the process of step S12.

When selecting the pressure specification to be set in the transmitter 21, the trigger device controlling unit 55 shows that pressure specification on the display 54. This allows the user of the trigger device 50 to recognize the pressure specification to be set in the transmitter 21. The trigger device controlling unit 55 may proceed to the process of steps S13 if the user manipulates the manipulation portions 51 of the trigger device 50, after displaying the pressure specification on the display 54. In this case, the user of the trigger device 50 checks whether the pressure specification displayed on the display 54 is the intended pressure specification. If it is not the intended pressure specification, the user can abort the transmission of the trigger signal by manipulating the manipulation portions 51. If the pressure specification displayed on the display 54 is the intended pressure specification, the user can cause the trigger device controlling unit 55 to proceed to the process of step S13 by manipulating the manipulation portions 51. Also, after displaying the pressure specification on the display 54, the trigger device controlling unit 55 may proceed to the process of steps S13 without requesting the user to manipulate the manipulation portions 51 of the trigger device 50. In this case, the user of the trigger device 50 can check the pressure specification to be set in the transmitter 21, but cannot abort the transmission of the trigger signal.

Next, in step S13, the trigger device controlling unit 55 transmits, from the trigger device transmission circuit 52, a trigger signal that contains the ID code entered in step S11, and the information representing the pressure specification selected according to the ID code in step S12. In the present embodiment, the information representing the pressure specification refers to trigger selection information, which indicates whether the pressure specification corresponding to the ID code is the standard-pressure specification or the high-pressure specification. The trigger selection information is, for example, data that associates each of the standard-pressure specification and the high-pressure specification with binary data (code). Different codes are given to the standard-pressure specification and the high-pressure specification. The trigger selection information is, for example, 1-bit data. The value of 0 of the trigger selection information indicates that the standard-pressure specification is selected, and the value of 1 of the trigger selection information indicates that the high-pressure specification is selected.

Next, in step S14, the transmitter controlling unit 25 writes the ID code contained in the received trigger signal into the storage unit 27.

Subsequently, in steps S15, the transmitter controlling unit 25 sets the pressure specification in accordance with the information representing the pressure specification contained in the trigger signal. That is, the transmitter controlling unit 25 selects the pressure specification based on the trigger selection information. The transmitter controlling unit 25 selects the standard-pressure specification if the trigger selection information contained in the trigger signal indicates the standard-pressure specification. The transmitter controlling unit 25 selects the high-pressure specification if the trigger selection information contained in the trigger signal indicates the high-pressure specification. In the present embodiment, the transmitter controlling unit 25 selects the standard-pressure specification if the trigger selection information contained in the trigger signal is 0. The transmitter controlling unit 25 selects the high-pressure specification if the trigger selection information is 1. The transmitter controlling unit 25 then stores the selection information corresponding to the selected pressure specification in the storage unit 27. This sets the ID code and the pressure specification of the transmitter 21.

The second embodiment has the following advantages.
(2-1) Based on the ID code entered into the trigger device 50, the trigger device controlling unit 55 selects the pressure specification linked to the ID code. The trigger device controlling unit 55 transmits information representing the ID code and the pressure specification to the transmitter 21, thereby writing the ID code into the storage unit 27 and setting the pressure specification. The pressure specification is set by writing the ID code into the storage unit 27. This reduces the number of operations performed by the user of the trigger device 50, as compared to a case in which writing of the ID code into the storage unit 27 and setting of the pressure specification are performed separately. This improves the operating efficiency of the user of the trigger device 50.
(2-2) The pressure specification is set based on the trigger selection information contained in the trigger signal. The pressure specification corresponding to the ID code is selected using the trigger device controlling unit 55. Therefore, the transmitter controlling unit 25 does not need to select the pressure specification according to the ID code. This allows the software of the transmitter 21 to be simplified.

The above-described embodiments may be modified as follows. The embodiments and the following modifications can be combined as long as the combined modifications remain technically consistent with each other.

In each of the embodiments, the specification may be other than the pressure specification. For example, the specification may be a protocol. A protocol is a set of rules for allowing the transmitter 21 and the receiver 40 to communicate with each other. Factors such as the frame format and the procedure vary depending on the protocol. The transmitter 21 needs to transmit a data signal that corresponds to the protocol of the receiver 40. The receiver 40 cannot receive data signals that do not correspond to the protocol of the receiver 40. The protocol of the receiver 40 varies depending on, for example, the manufacturer of the receiver 40 or the type of vehicle.

In the transmitter 21 of the first embodiment, the transmitter controlling unit 25 selects the protocol according to the ID code contained in the trigger signal. The storage unit 27 stores the linking information, which links ID codes and protocols to each other. As shown in Fig. 4, the linking information associates protocol A with the ID codes of which the most significant digits are 0 to 7 when the ID codes are expressed in hexadecimal. Also, the linking information associates protocol B with the ID codes of which the most significant digits are 8 to F when the ID codes are expressed in hexadecimal. Protocol A and protocol B are different from each other. The linking information links the protocols to the groups of the ID codes, which are grouped according to their values. When entering an ID code into the trigger device 50, the user enters an ID code that corresponds to the protocol of the receiver 40. In the example shown in Fig. 4, an ID code of which the most significant digit is 0 to 7 when the ID code is expressed in hexadecimal is entered if the protocol of the receiver 40 is protocol A. An ID code of which the most significant digit is 8 to F when the ID code is expressed in hexadecimal is entered if the protocol of the receiver 40 is protocol B. The transmitter controlling unit 25 selects the protocol linked to the ID code based on the linking information, and then stores the selection information corresponding to the selected protocol in the storage unit 27.

The trigger device 50 of the second embodiment stores, in the trigger device storage unit 57, the linking information, which associates the ID codes and the protocols with each other. When the user of the trigger device 50 enters an ID code, the trigger device controlling unit 55 selects the protocol requested to be set in the transmitter 21 based on the entered ID code. Then, the trigger device controlling unit 55 transmits, from the trigger device transmission circuit 52, a trigger signal that contains the entered ID code and the information representing the protocol that is selected based on the linking information. This allows the ID code to be written into the storage unit 27 of the transmitters 21, and allows the protocol to be set.

The specification may be other than the pressure specification or the protocol, but may be any specification such as the transmission interval of the data signal. When the transmitter 21 is caused to operate differently depending on whether the tire valve 15 is a clamp-in valve or a snap-in valve, the selection information of the tire valve 15 to which the transmitter 21 is attached may be transmitted. This allows the transmitter 21 to operate in accordance with a specification corresponding to the type of the tire valve 15.

In each of the embodiments, the pressure specifications may include more segmented specifications than the standard-pressure specification and the high-pressure specification. The standard-pressure tires include several types of tires that are used at different pressures. Accordingly, different pressure specifications may be set for the standard-pressure tires. Likewise, different pressure specifications may be set for the high-pressure tires. In this case, the linking information links the ID codes and the segmented pressure specifications to each other.

In each of the embodiments, the ID codes may be grouped according to digits other than the most significant digits. The ID codes may be grouped according to two or more digits. For example, the ID codes may be grouped according to the most significant digits and the second most significant digits.

In each of the embodiments, the linking information may link the ID codes to multiple types of specifications. The multiple types of specifications include the pressure specifications and the protocols. For example, the linking information links the standard-pressure specification and protocol A to the ID codes of which the most significant digits are 0 to 3 when the ID codes are expressed in hexadecimal. The linking information links the high-pressure specification and protocol A to the ID codes of which the most significant digits are 4 to 7 when the ID codes are expressed in hexadecimal. The linking information links the standard-pressure specification and protocol B to the ID codes of which the most significant digits are 8 to B when the ID codes are expressed in hexadecimal. The linking information links the high-pressure specification and protocol B to the ID codes of which the most significant digits are C to F when the ID codes are expressed in hexadecimal. The user of the trigger device 50 enters, into the trigger device 50, the ID code that corresponds to the type of the tire 13 of the wheel assembly 11 to which the transmitter 21 is attached, and the type of the protocol of the receiver 40. Accordingly, the entry of the ID code sets both the pressure specification of the transmitter 21 and the protocol.

In each of the embodiments, the linking information may link the numbers of digits of the ID codes to the specifications. Protocols include different types of protocols of different numbers of digits of the ID codes. Thus, the numbers of digits of the ID codes can be linked to the types of the protocols. In the example shown in Fig. 7, protocol A is a 24-bit ID code, and protocol B is a 28-bit ID code. Thus, by using linking information that links a 24-bit ID code to protocol A, and a 28-bit ID code to protocol B, the transmitter controlling unit 25 or the trigger device controlling unit 55 is allowed to set the protocol based on the ID code. In place of the protocols, the numbers of digits of the ID codes may be linked to the pressure specifications. For example, a protocol of a 28-bit ID code may be used for the standard-pressure specification, and a protocol of a 24-bit ID code may be used for the high-pressure specification. In this manner, the numbers of digits of the ID codes are linked to the pressure specifications.

The number of digits of the ID codes can be linked to the specifications by utilizing the difference in the number of digits of the ID codes between different protocols. This prevents an unintended specification from being set in the transmitter 21 due to an operational error such as an entry error of the ID code by the user of the trigger device 50.

In each of the embodiments, the linking information may link the specifications of transmitters 21 to the combinations of the numbers of digits and the values of ID codes. For example, the linking information links protocol A and the standard-pressure specification to a 24-bit ID code of which the most significant digit is 0 to 7 when the ID code is expressed in hexadecimal. The linking information links protocol B and the high-pressure specification to a 28-bit ID code of which the most significant digit is 8 to F when the ID code is expressed in hexadecimal.

In each of the embodiments, the selection information may be an ID code itself. The transmitter controlling unit 25 is capable of acquiring the correspondence between the values of the ID codes and the specifications based on the linking information. The transmitter controlling unit 25 may cause the transmitter 21 to operate in accordance with a specification that corresponds to the value of an ID code, by referring to the value of the ID code.

In each of the embodiments, a portable communication terminal carried by a user may be used as the ID registration device. Dedicated application software that executes processes similar to those of the trigger device 50 of each embodiment may be installed in the portable communication terminal. The portable communication terminal is caused to execute the application software to function as the ID registration device. The portable communication terminal may be any portable terminal that has communication function, such as a tablet computer, a smartphone, or a personal digital assistant. That is, the ID registration device does not necessarily need to be a dedicated device that registers an ID code in or set a specification for the transmitter 21.

In each of the embodiments, the pressure specification may include only the resolution and the pressure range of the pressure data. Alternatively, the pressure specification may include only the pressure sudden change threshold.

In each of the embodiments, it suffices if the transmitter 21 includes at least one sensor that is capable of detecting at least one of the condition of the tire 13 or the condition of the road surface. That is, it suffices if the transmitter 21 includes at least one of the pressure sensor 22, which is capable of detecting pressure as the condition of the tire 13, the temperature sensor 23, which is capable of detecting the temperature as the condition of the tire 13, or the acceleration sensor 24, which is capable of detecting the centrifugal force acting on the tire 13 as the condition of the tire 13. One example of the sensor that detects the condition of the road surface is the acceleration sensor 24. One example of the condition of the road surface is the friction coefficient of the road surface during traveling. The friction coefficient of the road surface can be calculated by detecting the acceleration of the vehicle 10 in the traveling direction and the lateral acceleration using the acceleration sensor 24.

In each of the embodiments, the number of digits of the code corresponding to the selection information may be changed in accordance with the number of specifications that can be selected. For example, if the number of selectable specifications is three, the selection information may be 2-bit information. Likewise, in the second embodiment, the number of digits of the code corresponding to the trigger selection information may be changed in accordance with the number of specifications that can be selected.

In each of the embodiments, the vehicle 10 may be a motorcycle or a vehicle having five or more wheel assemblies 11.

In the first embodiment, the value of 1 of the selection information may indicate that the standard-pressure specification is selected, and the value of 0 of the selection information indicates that the high-pressure specification is selected. In the second embodiment, the value of 1 of the trigger selection information may indicate that the standard-pressure specification is selected, and the value of 0 of the trigger selection information indicates that the high-pressure specification is selected. That is, the specifications and the codes may be associated with each other in any manner.

In the second embodiment, the linking information may associate each ID code with a specification. For example, the linking information may link the ID code of the transmitter 21 that has been distributed to the market and attached to the wheel assembly 11 to a specification corresponding to the vehicle 10 to which the transmitter 21 is attached. In this case, when the transmitter 21 is replaced by a new transmitter 21 due to breakdown or the end of life of the transmitter 21, the same ID code is set, so that the same specification as that of the transmitter 21 that was attached to the tire valve 15 can be set.

In the second embodiment, the trigger device controlling unit 55 does not necessarily need to show, on the display 54, the pressure specification set in the transmitter 21.

In the second embodiment, the information representing the specification may be the data of the specification itself, in place of the code associated with the specification. For example, the data of the specification itself includes the data of the pressure specification itself and the data of the protocol itself. When an ID code is entered, the trigger device controlling unit 55 transmits a trigger signal that contains the data of the specification linked to the ID code, thereby writing the specification into the storage unit 27. The specification is written into, for example, the EEPROM of the nonvolatile memory 29. The transmitter controlling unit 25 reads the specification written into the storage unit 27, and operates the transmitter 21 in accordance with the specification.

In the second embodiment, the linking information does not necessarily need to be stored in the trigger device storage unit 57. In one example, the linking information is stored in a server as a database. The trigger device 50 includes an interface such as a communication controlling unit or a port, and a network device capable of transmitting and receiving information through a communication network. The trigger device 50 acquires the linking information by accessing the database through the network device.

### DESCRIPTION OF THE REFERENCE NUMERALS

15...Tire Valve; 21...Transmitter; 22...Pressure Sensor; 25...Transmitter Controlling Unit as Controlling Unit; 27...Storing Unit as Specification Storage Unit, ID Storing Unit, and Linking Information Storing Unit; 33...Trigger Receiving Unit; 40...Receiver; 50...Trigger Device as ID Registration Device; 51...Manipulation Portion as Entry Unit; 52...Trigger Device Transmission Circuit as Trigger Transmitting Unit; 55...Trigger Device Controlling Unit as Selecting Unit

## Claims

1. A transmitter (21) configured to be attached to a tire valve (15) and transmit a data signal to a receiver (40), the transmitter (21) comprising:
a trigger receiving unit (53) configured to receive a trigger signal transmitted from an ID registration device (50), the trigger signal containing a command to the transmitter (21);
a specification storage unit (27) configured to store multiple types of specifications;
an ID storing unit (27) configured such that an ID code contained in the trigger signal received by the trigger receiving unit (53) is written into the ID storing unit (27);
**characterized in that** the transmitter comprises:
a linking information storing unit (27) configured to store linking information that links each of the specifications and ID codes to each other; and
a controlling unit (25) configured to cause, based on the linking information, the transmitter (21) to operate in accordance with the specification which is linked to the ID code stored in the ID storing unit (27).

2. The transmitter (21) according to claim 1, further comprising a pressure sensor (22) configured to detect an air pressure of a tire,
wherein the specifications include a pressure specification related to the air pressure of the tire detected by the pressure sensor (22).

3. The transmitter (21) according to claim 1 or 2, wherein the specifications include a protocol corresponding to the receiver (40).

4. The transmitter (21) according to any one of claims 1 to 3, wherein the linking information links the specifications to groups of the ID codes that are grouped according to the value of the ID codes.

5. The transmitter (21) according to any one of claims 1 to 4, wherein the linking information links the specifications to a number of digits of the ID code.

6. An ID registration device (50) configured to transmit a trigger signal containing a command to a transmitter (21) configured to be attached to a tire valve and comprising a pressure sensor (22) that operates in accordance with a specification selected from multiple types of specifications, the ID registration device (50) comprising:
an entry unit (51) configured such that an ID code to be written into an ID storing unit (27) of the transmitter (21) is entered into the entry unit (51);
**characterized in that** the ID registration device comprises a selecting unit (55) configured to select the specification linked to the ID code based on linking information that links each of the multiple types of specifications and ID codes to each other; and
a trigger transmitting unit (52) configured to transmit, to the transmitter (21), the trigger signal that contains the ID code entered using the entry unit (51) and information representing the specification selected by the selecting unit (55), thereby performing registration of the ID code in the transmitter (21) and setting of the specification in the transmitter (21).

## Patentansprüche

1. Sender (21), der ausgelegt ist zum Angebrachtwerden an einem Reifenventil (15) und Senden eines Datensignals an einen Empfänger (40), wobei der Sender (21) umfasst:
eine Auslöseempfangseinheit (53), die ausgelegt ist zum Empfangen eines von einer ID-Registriervorrichtung (50) gesendeten Auslösesignals, wobei das Auslösesignal einen Befehl an den Sender (21) enthält;
eine Spezifikationsablageeinheit (27), die ausgelegt ist zum Speichern mehrerer Typen von Spezifikationen;
eine ID-Ablageeinheit (27), die derart ausgelegt ist, dass ein in dem durch die Auslöseempfangseinheit (53) empfangenen Auslösesignal enthaltenen ID-Code in die ID-Ablageeinheit (27) geschrieben wird;
**dadurch gekennzeichnet, dass** der Sender umfasst:
eine Verknüpfungsinformationsablageeinheit (27), die ausgelegt ist zum Speichern von Verknüpfungsinformationen, die jede der Spezifikationen und ID-Codes miteinander verknüpft; und
eine Steuereinheit (25), die ausgelegt ist zu bewirken, auf Basis der Verknüpfungsinformationen, dass der Sender (21) gemäß der Spezifikation arbeitet, die mit dem in der ID-Ablageeinheit (27) gespeicherten ID-Code verknüpft ist.

2. Sender (21) nach Anspruch 1, weiter umfassend einen Drucksensor (22), der ausgelegt ist zum Detektieren eines Luftdrucks eines Reifens,
wobei die Spezifikationen eine Druckspezifikation bezüglich des Luftdrucks des Reifens, durch den Drucksensor (22) detektiert, enthalten.

3. Sender (21) nach Anspruch 1 oder 2, wobei die Spezifikationen ein Protokoll entsprechend dem Empfänger (40) enthalten.

4. Sender (21) nach einem der Ansprüche 1 bis 3, wobei die Verknüpfungsinformationen die Spezifikationen mit Gruppen der ID-Codes verknüpfen, die gemäß dem Wert der ID-Codes gruppiert sind.

5. Sender (21) nach einem der Ansprüche 1 bis 4, wobei die Verknüpfungsinformationen die Spezifikationen mit einer Anzahl von Ziffern des ID-Codes verknüpfen.

6. ID-Registrierungsvorrichtung (50), die ausgelegt ist zum Senden eines Auslösesignals, das einen Befehl an einen Sender (21) enthält, ausgelegt zum Angebrachtwerden an einem Reifenventil und umfassend einen Drucksensor (22), der gemäß einer Spezifikation arbeitet, ausgewählt unter mehreren Typen von Spezifikationen, wobei die ID-Registrierungsvorrichtung (50) umfasst:
eine Eingangseinheit (51), die derart ausgelegt ist, dass in eine ID-Ablageeinheit (27) des Senders (21) zu schreibender ID-Code in die Eintrittseinheit (51) eingegeben wird;
**dadurch gekennzeichnet, dass** die ID-Registrierungsvorrichtung eine Wahleinheit (55) umfasst, die ausgewählt ist zum Wählen der mit dem ID-Code verknüpften Spezifikation auf Basis von Verknüpfungsinformationen, die jeden der mehreren Typen von Spezifikationen und ID-Codes miteinander verknüpfen; und
eine Auslösesendeeinheit (52), die ausgelegt ist zum Senden, an den Sender (21), des Auslösesignals, das den unter Verwendung der Eintrittseinheit (51) eingegebenen ID-Code und Informationen, die die durch die Wahleinheit (55) gewählte Spezifikation darstellen, enthält, wodurch eine Registrierung des ID-Codes in dem Sender (21) durchgeführt wird und die Spezifikation in dem Sender (21) eingestellt wird.

## Revendications

1. Émetteur (21) configuré pour être fixé à une valve de pneu (15) et émettre un signal de données à un récepteur (40), l'émetteur (21) comprenant :
une unité de réception de déclenchement (53) configurée pour recevoir un signal de déclenchement émis depuis un dispositif d'enregistrement d'ID (50), le signal de déclenchement contenant une commande vers l'émetteur (21) ;
une unité de stockage de caractéristiques (27) configurée pour stocker de multiples types de caractéristiques ;
une unité de stockage d'ID (27) configurée de telle sorte qu'un code d'ID contenu dans le signal de déclenchement reçu par l'unité de réception de déclenchement (53) est écrit dans l'unité de stockage d'ID (27) ;
**caractérisé en ce que** l'émetteur comprend :
une unité de stockage d'informations de liaison (27) configurée pour stocker des informations de liaison qui lient chacun des caractéristiques et des codes d'ID les uns aux autres ; et
une unité de commande (25) configurée pour amener, sur la base des informations de liaison, l'émetteur (21) à fonctionner en fonction de la caractéristique qui est liée au code d'ID stocké dans l'unité de stockage d'ID (27) .

2. Émetteur (21) selon la revendication 1, comprenant en outre un capteur de pression (22) configuré pour détecter une pression pneumatique d'un pneu,
les caractéristiques comportant une caractéristique de pression liée à la pression pneumatique du pneu détectée par le capteur de pression (22).

3. Émetteur (21) selon la revendication 1 ou 2, les caractéristiques comportant un protocole correspondant au récepteur (40).

4. Émetteur (21) selon l'une quelconque des revendications 1 à 3, les informations de liaison liant les caractéristiques à des groupes des codes d'ID qui sont groupés selon la valeur des codes d'ID.

5. Émetteur (21) selon l'une quelconque des revendications 1 à 4, les informations de liaison liant les caractéristiques à un nombre de numéros du code d'ID.

6. Dispositif d'enregistrement d'ID (50) configuré pour émettre un signal de déclenchement contenant une commande vers un émetteur (21) configuré pour être fixé à une valve de pneu et comprenant un capteur de pression (22) qui fonctionne selon une caractéristique choisie parmi de multiples types de caractéristiques, le dispositif d'enregistrement d'ID (50) comprenant :
une unité d'entrée (51) configurée de telle sorte qu'un code d'ID à écrire dans une unité de stockage d'ID (27) de l'émetteur (21) est entré dans l'unité d'entrée (51) ;
**caractérisé en ce que** le dispositif d'enregistrement d'ID comprend une unité de sélection (55) configurée pour sélectionner la caractéristique liée au code d'ID sur la base des informations de liaison qui lient chacun des multiples types de spécifications et des codes d'ID les uns aux autres ; et
une unité d'émission de déclenchement (52) configurée pour émettre, vers l'émetteur (21), le signal de déclenchement qui contient le code d'ID entré en utilisant l'unité d'entrée (51) et des informations représentant la caractéristique choisie par l'unité de sélection (55), réalisant ainsi l'enregistrement du code d'ID dans l'émetteur (21) et la définition de la caractéristique dans l'émetteur (21).
